(19)

**Europäisches Patentamt**
**European Patent Office**
**Office européen des brevets**

(11) **EP 4 498 290 A1**

(12) **EUROPEAN PATENT APPLICATION**

(43) Date of publication:
**29.01.2025 Bulletin 2025/05**

(21) Application number: **23382770.8**

(22) Date of filing: **24.07.2023**

(51) International Patent Classification (IPC):
**G06N 5/01** *(2023.01)* **G06N 10/60** *(2022.01)*
**G06Q 10/047** *(2023.01)*

(52) Cooperative Patent Classification (CPC):
**G06N 5/01; G06N 10/60; G06Q 10/04;**
**G06Q 10/0637**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Multiverse Computing S.L.**
**20014 Donostia / San Sebastián (ES)**

(72) Inventor: **Orús, Román**
**20014 Donostia / San Sebastián (ES)**

(74) Representative: **Sonnenberg Harrison**
**Partnerschaft mbB**
**Herzogspitalstraße 10a**
**80331 München (DE)**

(54) **METHOD AND SYSTEM FOR COMBINATORIAL OPTIMISATION OF COST FUNCTIONS**

(57) This document teaches a computer implemented method for solving a combinatorial optimization problem of a cost function implemented on a digital computer system comprising a processor (10) adapted to execute a time evolving block decimation (TEBD) algorithm. The method comprises mapping the cost function to a Hamiltonian ($H(x_1, x_2, \ldots x_n)$) in a mapping module (80), choosing an initial state of a vector space (V) representative of the cost function, applying a time-evolution operator (O) to the state to produce an updated state, iteratively applying the time-evolution operator to the updated state to produce a further updated state until a ground state is reached, and determining the cost function from the ground state of the Hamiltonian.

Fig. 6

| S600: Input of discrete variables |
|---|
| S610: Mapping of variables of cost function to Hamiltonian |
| S620: Creation of Vector space |
| S623: Decomposition of Hamiltonian in two Hamiltonian terms |
| S626: Tropicalization of two Hamiltonian terms |
| S630: Choosing an initial state of Vector space V |
| S635: Decomposition of time-evolution operator O |
| S640: Producing updated state of Vector space |
| S650: Determining cost function from ground state of Hamiltonian |
| S660: Read-out of variables of ground state of Hamiltonian |

EP 4 498 290 A1

**Description**

CROSS-REFERENCE TO RELATED APPLICATIONS

None

FIELD OF THE INVENTION

The field of the invention relates to a computer-implemented method and a system for combinatorial optimization of cost functions.

BACKGROUND OF THE INVENTION

Combinatorial optimisation endeavours to find an optimal solution from a finite set of possible solution in which a set of feasible solutions to a problem is discrete, or at least can be reduced to a discrete set. In most cases, it is not possible to conduct an exhaustive search of all of the feasible solutions, as the time required to conduct this search would be too great. Specialised algorithms are therefore used to rule out large parts of the search space for the possible solutions.

The combinatorial optimization of cost functions is used in a broad spectrum of applications. Non-limiting examples include aviation, logistics, finance, machine learning, manufacturing, chemistry, and quantum computing. Known examples of applications of the combinatorial optimization include the so-called "travelling salesman" problem to identify the shortest route between various nodes, assigning gates to flights at an airport, transporting goods between set locations to set facilities, optimizing a portfolio of financial assets to maximize returns at minimal risk, optimizing how circuit elements must be arranged on an electronic board, and finding the lowest energy configuration of a classical spin glass.

In the method of combinatorial optimization, a cost function of discrete variables must be minimized or maximized subject to certain constraints. The discrete variables of the cost function differ according to the application and are, for example, investment per asset in the case of optimization of a financial portfolio, time, distance, and speed for the travelling salesperson problem or energy states for chemical compounds.

The present document will focus on quadratic combinatorial optimization, but this is not limiting aspect of the invention and the solution proposed by the present document also applies to higher-order cost functions (e.g., cubic cost function).

The combinatorial optimization problem is known to be NP-hard (nondeterministic polynomial-time hardness) and, as noted above, difficult to solve in general because the number of possible configurations of input variables for the combinatorial optimisation grows exponentially with a number of the input variables used in the cost function. This exponential growth of the number of possible configurations of the input variables makes it very challenging (and mostly impossible) to conduct an exhaustive search of the many input variables to identify an optimal configuration of the input variables. Therefore, numerical and approximations algorithms must be used to solve the combinatorial optimization problems.

One of the challenges to solve the problem of combinatorial optimization is to improve existing methods and to develop novel approaches. The present document describes a novel quantum-inspired algorithmic method used on a classical processor for accelerating processing of the problem of combinatorial optimization.

Another reason for developing the quantum-inspired method for the combinatorial optimization problem is to demonstrate advantages of quantum-inspired optimization methods and their possible use on a quantum processor. The combinatorial optimization problems are known to have a discrete nature and exponential scaling. Therefore, the combinatorial optimization problems became one of the main applications to demonstrate advantages of quantum-inspired algorithms on currently available noisy quantum devices, e.g., D-wave machine.

The present document represents an improvement on the state-of-the-art algorithmic method named Time-Evolving Block Decimation (TEBD) for solving the combinatorial optimization problems. The TEBD algorithm is a numerical scheme which is used to simulate one-dimensional quantum many-body systems. The bodies in the many-body systems are characterised (at most) by nearest neighbour interactions. The TEBD algorithm was invented to find the ground states (lowest energy states) of quantum systems.

Several powerful classical algorithms are known in the art for the classical combinatorial optimization problem. One example is a Gurobi optimizer. The Gurobi optimizer offers solutions for small and medium-sized combinatorial optimization problems. Currently, scaling performance of the Gurobi optimizer is achieved by running the optimizer on a high-performance computer.

More recently, quantum algorithms and quantum-inspired algorithms have also been developed to tackle the combinatorial optimization problem. It is known that that the classical combinatorial optimization problem can be mapped to find the ground state of a Hamiltonian, which is challenging task for the quantum algorithms and the quantum-inspired algorithms.

On quantum computers, the combinatorial optimization problem can be solved by a Quantum Approximate Optimization Algorithm (QAOA) or by running a Hamiltonian formulation of the combinatorial optimization problem on a quantum annealer, e.g., D-wave annealer. For example, US Patent No US 10,452,990 (Gambetta et al, assigned to IBM) teaches a system and method for solving a combinatorial optimization using quantum hardware. US Patent No. US 11,580,438 (McMahon et al, assigned to QC Ware Corp) also teaches a system and method for solving the combinatorial optimization problem. This '438 patent modifies a driver Hamiltonian used in the solution.

However, the quantum algorithms running on a quantum processor and the quantum-inspired algorithms running on a classical processor have not yet surpassed the classical algorithms (e.g., the Gurobi algorithm) in terms of performance for small and medium-sized combinatorial optimization problems.

The use of tensor networks to compute the solution space properties is known from Liu et al "Computing Solution Space Properties of Combinatorial Optimization Problems via General Tensor Networks," arXiv:12205.03718v3, dated 23 September 2022. Liu et al also published the use of a tropical tensor network to solve combinatorial optimization problems in "Tropical Tensor Network for Ground States of Spin Glasses" arXiv:2008.06888v2, 17 February 2021.

## BRIEF SUMMARY OF THE INVENTION

The state-of-the-art TEBD algorithm is based on a regular algebra of complex matrices. The present document teaches a computer-implemented method to apply the regular algebra of complex matrices to the subset of matrices named tropical matrices.

The TEBD algorithm is therefore adapted to use a tropical algebra instead of the regular algebra. A change from the regular algebra to the tropical algebra is suitable for adapting the quantum inspired TEBD algorithm to solve a classical combinatorial optimization problem. The tropical version of the TEBD algorithm improves the classical structure of the combinatorial optimization problem.

The present invention improves the TEBD algorithm for the combinatorial optimization problems and can outperform the classical algorithms (e.g., the Gurobi optimizer) and current near-term noisy quantum devices in the highly challenging regime where the number of the input variables and the number of constraints is large.

A computer implemented method for solving a combinatorial optimization problem of a cost function implemented on a digital computer system is described. The method comprises a processor adapted to execute a time evolving block decimation algorithm. The method using a classical processor comprises in a first step a mapping the cost function to a Hamiltonian in a mapping module. In a following step the method comprises a choosing an initial state of a vector space representative of the cost function, followed by applying a time-evolution operator to the state to produce an updated state. The time-evolving operator is iteratively applied to the updated state to produce a further updated state until a ground state is reached. Finally, the method determines the cost function from the ground state of the Hamiltonian.

The method can comprise a step of decomposing in a decomposition module the Hamiltonian into a sum of two variable Hamiltonians having two variable Hamiltonian terms.

The method can further comprise a step of applying the time-evolution operator only to a subset of the states in the vector space which are matrix product states.

The method can further comprise tropicalizing terms in the Hamiltonian in a tropicalization module prior to applying the time-evolution operator.

The method can further comprise a step of decomposing the time-evolution operator into one of a product of two variable operators or using a Suzuki-Trotter expansion.

A use of the computer implemented method for solving a combinatorial optimization problem of a cost function is also disclosed. The cost function is representative of one of a travelling salesperson problem, logistics, energies in chemical state of a chemical compound, or energy transmission networks.

A computer system for solving a combinatorial optimization problem of a cost function is also disclosed. The system comprises a memory for storing data relating to states of a vector space representative of the cost function and executable computer components. The system further comprises a processor for executing the executable computer modules. The executable computer modules comprise a mapping module for mapping the cost function to a Hamiltonian and a TEBD module for applying a time-evolution operator to the states of the vector space until a ground state of the Hamiltonian is determined.

The computer system can comprise a decomposition module for decomposing the Hamiltonian into a sum of two variable Hamiltonians having two variable Hamiltonian terms. The computer system can comprise a tropicalization module for tropicalizing terms in the Hamiltonian.

The computer system can comprise an input device for inputting the cost function to the memory and an output device for outputting the ground states of the Hamiltonian.

The TEBD module of the system can be adapted to decompose the time-evolution operator into one of a product of two variable operators or using a Suzuki-Trotter expansion.

DESCRIPTION OF THE FIGURES

Fig. 1 shows examples of matrix product states or tensor trains
Fig. 2 shows an example of a TEBD algorithm.
Fig. 3 shows an optimised TEBD algorithm.
Fig. 4 shows the tropicalization method.
Fig. 5 shows an example of a computer system for implementing the method of this document.
Fig. 6 shows a flow chart of the method of this document.

DETAILED DESCRIPTION OF THE INVENTION

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

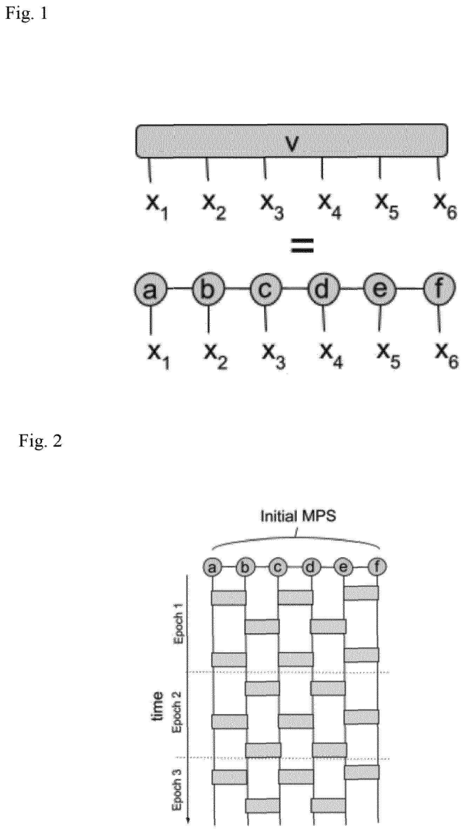

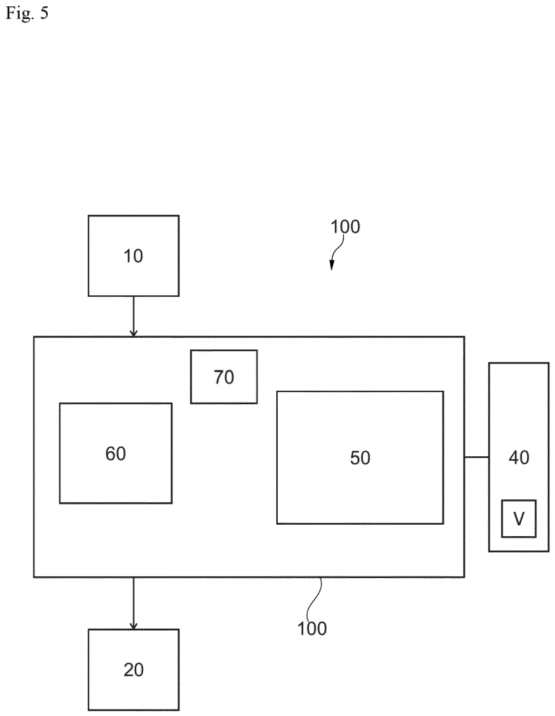

Fig. 5 shows an example of a computing system for implementing the computer-implemented method of this document. Fig. 1 shows a system 100 having a (classical) processor 10 with an input device 20 and an output device 30. The system 100 is shown using a classical processor 10, but it will be appreciated that the system 100 can be extended with the addition of a quantum processor connected to the classical processor 10.

The TEBD algorithmic method is implemented by software on a TEBD module 50 running in the processor 10. An input to the TEBD algorithm running in the processor 10 is a set of discrete variables $x_1$, $x_2$, ... $x_n$, and a Hamiltonian $H(x_1, x_2, ... x_n)$ representative of a cost function. This input is provided through the input device 10 and stored in a memory 40 which is accessible from the TEBD module 50.

The discrete variables have values $x_1$, $x_2$, ... $x_n$ which range from 1 to a maximum value d. The discrete variables represent variables of the problem. For example, the discrete variables could represent the distances between cities, the average speed allowed along a route between the cities, as well as other constraints in a travelling salesperson problem.

In another example, the discrete variables of the cost function could represent the bonding energies in a chemical bond.

A particular assignment of the discrete variables, for example, $x_1 = 0$, $x_2 = 0$, $x_3 = 1$, ... $x_n = 1$, is called a classical configuration of the discrete variables. Typically, the values of the discrete variables can take the values 1 or 0, but this is not limiting of the method and other values can be used. The Hamiltonian assigns a cost or energy to every possible configuration of the discrete variables.

In a combinatorial optimization problem, the Hamiltonian $H$ encodes a cost function representative of the problem to be solved. For instance, for a quadratic combinatorial optimization problem with three variables $x_1$, $x_2$, $x_3$ the Hamiltonian $H$ may be of the form:

$$H(x_1, x_2, x_3) = J_{12}x_1x_2 + J_{23}x_2x_3 + J_{13}x_1x_3$$

wherein $J_{12}$, $J_{23}$, $J_{13}$ are coefficients depending on the optimization problem. It will be appreciated that this form of Hamiltonian can be generalised to more variables.

In a non-limiting example, optimization problems are the route optimization problem for delivery routes, optimization of energy grids, optimization of predictive maintenance of machines in a factory, portfolio optimization, financial equilibrium, machine learning boosting classifiers for anomaly detection, pattern detection, image, and speech recognition. The Hamiltonians are generated from variables which are representative for such optimization problems.

For example, in order to generate a Hamiltonian for the optimization of a delivery route, it is necessary to encode the problem into a graph. The nodes in the graph represent the delivery locations and the edges would represent the routes between the nodes. This graph that generates a Hamiltonian, describes the energy of the system. Similarly, optimisation of predictive maintenance of machines in a factory involves the construction of a graph in which the nodes of the graph represent the machines in the factors and the edges represent the relationships between the machines.

The Hamiltonian is used to describe the energy of a financial system to enable portfolio optimisation or financial equilibrium. The Hamiltonian is used in mathematical finance to describe the state of a financial system and how the financial system evolves over time. To create a Hamiltonian for a financial system, it is necessary to define the variables that describe the state of the financial system. These variables could include, but are not limited to, stock prices, interest rates, exchange rates, and volatility. The Hamiltonian can then be constructed using filed theory which describes how the variables vary over time (and space).

There are different ways to generate a Hamiltonian for the financial system, but one common method is to use field theory. Field theory is a mathematical framework that describes how fields interact with each other.

To set up the TEBD algorithm for the quadratic combinatorial optimization problem, the cost function needs to be mapped to the Hamiltonian. This mapping is done in a mapping module 80 in the processor 10. It will be understood that the Hamiltonian $H$ is a quantum Hamiltonian function that acts on a vector space $V$. The vector space V is spanned by classical states corresponding to classical configurations of the discrete variables. The vector space V is a set of all vectors of the form:

$$V = \sum_{x_1, x_2, \dots x_n} C\, x_1, x_2, \dots x_n \mid x_1, x_2, \dots x_n >$$

where coefficients $C\, x_1, x_2, \dots x_n$ are real numbers and $\mid x_1, x_2, \dots x_n >$ is a quantum state corresponding to the classical configuration of the discrete variables $x_1, x_2, \dots x_n$.

An output of the TEBD module 50 implementing the TEBD algorithm is provided at the output device 30 and is the ground state of the Hamiltonian. This output is, in the case of the combinatorial optimization problem, is an optimal classical configuration (e.g., a classical state) with the lowest cost and will be generally a sufficiently good solution and, in many cases, the most optimal solution to the combinatorial optimization problem. For more general Hamiltonian functions, the ground state could be an entangled state of the form of the vector space V with several non-zero coefficients $C\, x_1, x_2, \dots x_n$.

For the quadratic combinatorial optimization, the Hamiltonian can be decomposed as a sum of two smaller variable Hamiltonian as follows:

$$H(x_1, x_2, \dots x_n) = \sum_{ij} H_{ij}(x_i, x_j) \dots \qquad (1)$$

It should be noted that in the sum of Hamiltonians, there is exactly one two-variable Hamiltonian terms for every pair of variables. A compact notation of the Hamiltonian will be further used: $H_{ij} = H_{ij}(x_i, x_j)$. This decomposition of the input Hamiltonian is conducted in a decomposition module 60 in the processor 10.

The TEBD algorithm iteratively evolves in the TEBD module 50 from a suitable initial state (which is represented by a vector inside the vector space V) for a time $T = N \times t$ via an imaginary time-evolution operator $O$. The suitable initial state is chosen arbitrarily. The variable t is a time step, and the variable N represents the number of the epochs (i.e., iterations). Differential equations in the quantum systems are a time-dependent Schrodinger equation, which can be rewritten in the form of the imaginary time-evolution operator $O$:

$$O = \exp(-t \times H) \qquad (2)$$

The state at time $t=k+1$ is obtained by multiplying a state vector at time $k$ with the imaginary time-evolution operator O:

$$\mid state\ at\ T = k + 1 >= \exp(-t \times H) \mid state\ at\ T = k > \cdots \qquad (3)$$

It can be shown that if the initial state is not orthogonal to the ground state, then the imaginary time-evolution operator $O$ will tend to the ground state as longer times are involved, e.g., when the value of the time $T$ becomes longer. The ground state is expected to be reached when a convergence of physical quantities is determined to have reached a pre-determined threshold. The convergence of physical quantities is the value of the cost function. The pre-determined threshold for a determined set of parameters (for example coefficients $x_1, x_2, \dots x_n$) can be adapted to each optimization problem. In one non limiting example, the threshold is $1^{e-10}$.

One issue is that with the increase in size of the combinatorial optimization problem, i.e., with an increase in the number of the discrete variables, then the size of the state vectors and the imaginary time-evolution operator $O$ increase exponentially.

Two ideas can be applied to the TEBD algorithm which make the TEBD algorithm efficient and scalable algorithm.

The first idea of the TEBD algorithm is to restrict the time evolution of the TEBD algorithm only to a particular subset of states in the vector space V called Matrix Product States (MPS), or Tensor Trains as illustrated in Fig. 1. This subset of states is stored in the memory 40. The MPS is a type of Tensor Network (TN) in which the tensors are arranged in a one-dimensional geometry. The MPS can represent a large number of classical states extremely well despite the simple structure of the MPS.

One way to deal with exponentials presented in the equation (2) is to decompose the imaginary time-evolution operator O for "sufficiently small" time steps using the Suzuki-Trotter decomposition. The Suzuki-Trotter decomposition provides an approximation to a matrix exponential by decomposing the matrix exponential into a product of simpler operators. Specifically, the Suzuki-Trotter decomposition decomposes the exponential of a sum of two operators A and B as follow:

$$\exp(t(A + B)) \approx \exp(tA).\exp(tB)$$

where t is a small time step.

This decomposition allows the split of the time evolution into a number of separate time steps, each time step corresponding to the exponentiation of a single operator A, B. By choosing an appropriate time step and iterating the decomposition, it is possible to approximate the time evolution of the system.

The second idea is to decompose (approximately) a total n-variable imaginary time-evolution operator $O$ as a product of two variable operators:

$$O \approx E^N = \left( \pi_{ij}\exp\left(-t \times H_{ij}\right) \right)^N \ldots \qquad (4)$$

An operator $E$ implements a single epoch $N$ of the time evolution of the imaginary time-evolution operation $O$, for example, a single round of all two-variable time-evolution operators $O$ for the time step $t$. The two-variable time evolution $\exp(-t \times H_{ij})$ should be understood as an identity operator on all of the variables $i$ and $j$.

It will be apricated that, if the result of the time evolution of the Hamiltonian depends on the order in which the two-variable time evolutions are applied to the Hamiltonian, the Suzuki-Trotter decomposition is only an approximate decomposition. In other words, in the case of the quantum Hamiltonian, the form of the Hamiltonian is not necessarily presented in the form of $H(i, j, k)$. The quantum Hamiltonian will depend on non-commuting matrices, for example, the Pauli matrices. In this case, the exponential of a sum of non-commuting matrices will not be the product of the exponentials of the matrices. As a result, there will be an error associated with the Suzuki-Trotter decomposition of the quantum Hamiltonian. The Suzuki-Trotter decomposition is therefore approximate. The Hamiltonian of the present document is a classical Hamiltonian which is built from the commuting matrices. The exponentials of a sum of the matrices will also commute with each other which allows to minimise the approximation error.

Mathematically, the time evolution is an order-dependent function if the two-variable Hamiltonians (e.g., Hamiltonian matrices) do not commute. The two-variable Hamiltonian functions do not commute when there are coefficients $i, j$ and $i, k$ such that $H_{ij} \times H_{ik} \neq H_{ik} \times H_{ij}$. The Suzuki-Trotter approximation error in this (non-commutation case) is of the second order - $t^2$. Therefore, the parameter of the time step $t$ of the TEBD algorithm for the evolution has to be chosen carefully to minimise the approximation error, but to avoid too long computation time.

The TEBD algorithm converges to the ground state after a relatively long-time evolution, for example, when the epoch $N = T/t$ is large. As noted above, to keep the Suzuki-Trotter approximation error small, the steps of the time evolution have to be conducted during the small period of time step t.

According to the decomposition of the imaginary time-evolution operator O shown in equation (4), the TEBD algorithm reduces in the TEBD module 50 to applying, on a chosen initial MPS from the memory 40, a sequence of small imaginary time-evolutions on pairs of neighbouring variables until convergence.

An example will serve to explain this. The Travelling Salesman Problem is a well-known route optimization problem which is categorized as an NP-hard problem. There is no known classical algorithm that can solve this problem exactly in polynomial time. As noted above, in the Travelling Salesman Problem there is a "map" which is a connected graph, and the "map" includes $n$ number of cities and $m$ number of different paths between any pair of two cities. The goal of a travelling salesperson is to visit each city on the map exactly once, and finally come back to the origin city as soon as all the cities have been visited. Furthermore, the overall goal of the travelling salesperson is to find the optimal route, such that the travelling cost is minimized.

Therefore, since the MPS has a one-dimensional structure, the variables of the imaginary time-evolution are neighbours in the Tensor Network ansatz.

Fig. 2 shows an example of the TEBD algorithm as implemented in the TEBD module 50. Rectangular boxes in Fig. 2 implement the two-variable time-evolutions. The rectangular boxes in Fig. 2 are also called "gates" in analogy to quantum circuits. However, unlike the quantum circuits, the gates are not unitary.

The TEBD algorithm running in the TEBD module 50 proceeds by iteratively updating the MPS stored in the memory 40 by applying the gates one by one to the parameters of the MPS. After a sufficient number of epochs N, typically a very large number of epochs, the value of the MPS converges to the ground state of the Hamiltonian. When the TEBD algorithm is applied to the combinatorial optimization problem, the ground state of the Hamiltonian is an approximation to the optimal value of the discrete variables of the problem. The use of the MPS, the decomposition of the imaginary time-evolution operator $O$ into two-variable gates, and the ability to update the MPS only locally for the two-variable gates are the main reasons for high scalability of the TEBD algorithm.

The most computationally intensive step is updating the values of the parameters in the MPS stored in the memory 40 after applying the gates. The updating of the MPS comprises a sequence of matrix multiplications and a singular value decomposition conducted in the TEBD module 50. The singular value decomposition is the main computational challenge of the TEBD algorithm running in the TEBD module 50 on the classical processor 20.

The TEBD algorithm has been a common algorithm for finding the ground states of the quantum Hamiltonians $H$. However, applying the TEBD algorithm to find the ground state of classical Hamiltonians is a known challenge in the combinatorial optimization problem. The structural difference between the quantum Hamiltonian and the classical Hamiltonian can be explained mathematically. In the classical systems, classical operators commute with each other.

Therefore, a direct application of the TEBD algorithm to the classical combinatorial optimization problem (formulated as a Hamiltonian problem) does not exploit the inherent classical structure of the combinatorial optimization problem. Numerical experiments show that the TEBD algorithm tends to explore highly entangled quantum states during the search in the vector space V for the optimal classical solution of the combinatorial optimization problem. This exploring of the highly entangled quantum states is a disadvantage of the TEBD algorithm since the computational cost of running the TEBD algorithm on the classical processor 10 increases with the amount of entanglement of the quantum states generated during the TEBD algorithm.

In the present document, the adaptation of the TEBD algorithm for the classical combinatorial optimization problem is described. The adaptation of the TEBD algorithm exploits the classical structure of the combinatorial optimization problem that improves the performance and accuracy of the TEBD algorithm.

The present document adapts the TEBD algorithm in the TEBD module 50 to tropical algebra instead of regular algebra. Regular algebra is known to be large and complex system. The TEBD algorithm is based on the regular algebra of complex matrices. However, only a special subset of matrices needs to be used in the case of classical combinatorial optimization problem. The special subset of matrices that is used in the improved TEBD algorithm is the tropical matrices.

The tropical algebra is employed for solving large-size combinatorial optimization problems. In the case of the classical combinatorial optimization problem, the two-variable Hamiltonian terms $H_{ij}$ are diagonal matrices which commute with each other. The decomposition of the imaginary time-evolution operator $O$ described by the equation (4) is exact in the case of the diagonal matrices. The exact decomposition means that there is no Suzuki-Trotter approximation error, as known in the prior art and discussed above. Since there is no Suzuki-Trotter approximation error, the time step $t$ does not have to be small in the equation (4). Therefore, it is possible to choose the time step $t$ to be as large as possible.

The TEBD algorithm converges to the ground state when $T \to \infty$, and that $T = N \times t$, where $t$ is the time-step for the time-evolution and $N$ is the number of the epochs. As noted above, there is no restriction on how large the time step $t$ has to be. It is therefore possible to take the limit of time step $t \to \infty$ and set the number of the epochs $N=1$. Therefore, the optimal solution of the problem can be achieved using only one epoch N of the time evolution, when the time step $t$ is set to be a very large number.

However, setting the time step $t$ to a very large number results in "ill-conditioned" matrices. For example, a slight change in input parameters causes a large change in the discrete variables $x_1$, $x_2$, ... $x_n$. Matrix operations used in the TEBD module 50 are the matrix multiplication and the singular value decomposition. The "ill-conditioned" matrices can produce therefore unpredictable results. Therefore, the main computational challenge is to operate on the matrices with exponentially small entries.

Since the Hamiltonian terms $H_{ij}$ are diagonal, the two-variable gates $U_{ij} = \exp(-t \times H_{ij})$ are also diagonal matrices as follows:

$$diag(\exp(-t \times p), \exp(-t \times q), ..., \exp(-t \times r))$$

The arrays comprising the initial MPS can be chosen to be composed of zeros and ones, which can be expressed as follows:

$$0 = \exp(-t \times \infty) \: and \: 1 = \exp(-t \times 0) \: ... \qquad (5)$$

All numbers in the problem are of the form:

$$\exp(-t \times p) \: with \: t \to \infty \: ... \qquad (6)$$

Therefore, most of the matrix operations, except the singular value decomposition, used in the TEBD algorithm comprise multiplying and adding numbers of the form expressed in the equation (6). Therefore:

$$\exp(-t \times p) + \exp(-t \times q) = \exp(-t \times \min(p, q)) \dots \qquad (7)$$

$$\exp(-t \times p) \times \exp(-t \times q) = \exp(-t \times (p + q)) \dots \qquad (8)$$

An equation in the equation (7) is without Suzuki-Trotter approximation error when the time step $t \to \infty$. The result of the expression in the equation (7) is approximate (with the Suzuki-Trotter approximation error) when the time step t takes finite values.

Since the numbers of the equation (6) are in the form of exp(-$t \times p$) *with* $t \to \infty$, it is possible to use the concepts of tropical geometry and restrict the solution of the equation (6) to the exponential components *p, q*. Therefore, the equations (7) and (8) can be expressed as follows:

$$p \oplus q = \min(p, q) \dots \qquad (9)$$

$$p \odot q = p + q \dots \qquad (10)$$

Real numbers along with the positive infinity ($\infty$) that fulfil the equations (9) and (10) are related to the tropical algebra. The tropical algebra is defined by replacing a usual addition operator for ordinary real numbers with a min operator and a product or multiplication operator with a sum operator. It is known that (-$\infty$) acts as zero element for tropical numbers since -$\infty \oplus p = p$ and -$\infty \odot p = -\infty$. A zero element acts as a multiplicative identity since $0 \odot p = p$. The min operator $\oplus$ and the sum operator Q have commutative, associative, and distributive properties. It is known that the min operator $\oplus$ and the sum operator Q have no additive inverse.

Let $x_1, \dots, x_n$ be variables that represent elements in the tropical semiring $((\mathbb{R} \cup \{\infty\}), \odot, \oplus)$. A monomial is any product of these variables. The product and monomials can be sorted in the usual notation by commutativity and associativity:

$$x_2 \odot x_1 \odot x_3 \odot x_1 \odot x_4 \odot x_2 \odot x_3 \odot x_2 = x_1^2 x_2^3 x_3^2 x_4$$

In this case the variables have raised to exponents. As previously explained, $x_1^2$ means $x_1 \odot x_1$ and not $x_1 \cdot x_1$.

The monomial represents a function from $\mathbb{R}^n$ to $\mathbb{R}$. When evaluating this function in classical algebra, a linear function would be obtained:

$$x_2 + x_1 + x_3 + x_1 + x_4 + x_2 + x_3 + x_2 = 2x_1 + 2x_2 + 2x_3 + x_4$$

Therefore, the tropical monomials are the linear functions with integer coefficients. The function $p : \mathbb{R}^n$ to $\mathbb{R}$ has the following three properties: $p$ is continuous, $p$ is piecewise-linear, where the number of pieces is finite, and $p$ is concave for all $x_1, x_2 \in \mathbb{R}^n$. In other words, instead of working with the exponentials of the variables the TEBD algorithm, for example the imaginary time-evolution operator $O$, the tropical algebra allows to operate directly with the exponents of the variables. Operating with the tropical algebra enables optimization of the computational resources by exploring an optimal subspace of large quantum space.

The equations (7) and (8) are a one-dimensional representation of tropical algebra T ($\oplus$, $\odot$). Since the tropical functions are continuous, piecewise-linear and concave, the tropical algebra provides a way to solve the problem of "ill-conditioned" matrices in the TEBD algorithm. Changing the regular matrices with exponentially small values to the tropical matrices of the equations (9) and (10) avoids operating directly with the ill-conditioned matrices known in the prior art TEBD algorithms.

In the TEBD algorithm of the present document, a tropicalization map T is implemented in a tropicalization module 70. As is known from tropical algebra, the tropicalization module 70 converts the exponentials to a real number:

$$T: \exp(-t \times p) \mapsto p \dots \qquad (11)$$

Therefore, a corresponding de-Tropicalization map D (also in the tropicalization module 70) is:

$$D: p \mapsto \exp(-t \times p) \dots \qquad (12)$$

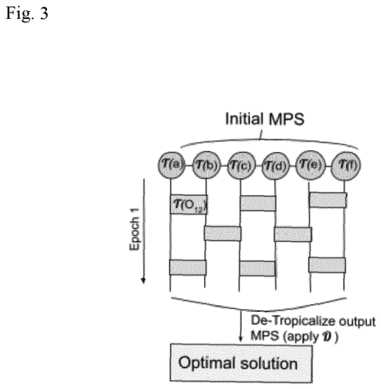

The optimized tropical TEBD algorithm is shown in Fig. 3.

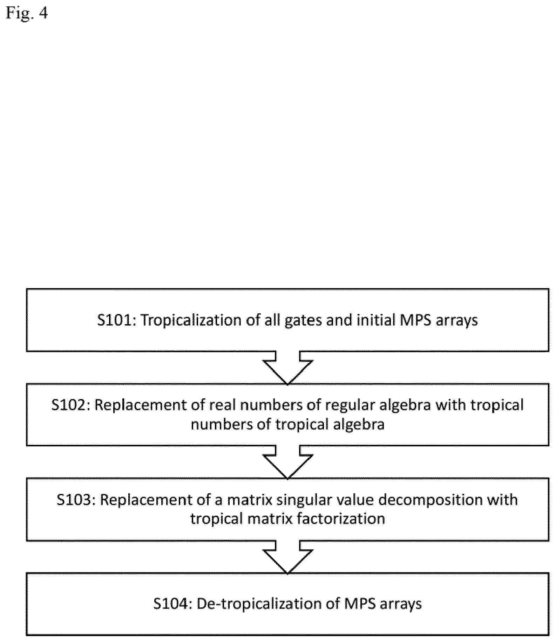

The flow diagram for the method of the tropical TEBD algorithm is shown in Fig. 4.

In a first step S101, the method is started by tropicalization of all the gates and the initial MPS arrays in the tropicalization module 70 by applying the tropicalization map T component to each MPS array (stored in the memory 40). As noted above, the initial MPS arrays are made of zeros and ones. The tropicalization of the initial MPS arrays results in the MPS arrays made of multiplicative units (operator $\odot$) and additive units (operator $\otimes$) of the tropical algebra as shown in the equation (5).

In step S102, the matrix multiplications can be implemented as the real numbers of the regular algebra have been replaced with tropical numbers of the tropical algebra.

In step S103, the matrix singular value decomposition is replaced with a tropical matrix factorization according to the equation (13):

$$M = A \odot B \qquad (13)$$

where M, A and B are $n \times m$, $n \times k$, and $k \times m$ tropical matrices.

Only one epoch of the algorithm is run in the TEBD module 50.

In step S104, the resulting MPS arrays are de-tropicalized in the tropicalization module to obtain a regular MPS array in the memory 40. The de-tropicalized regular MPS array is a sought-optimal solution of the cost function.

As noted above, by tropicalizing the TEBD algorithm, it is avoided to work with the ill-conditioned matrices. All the matrices of the TEBD algorithm are diagonal and exponentiating all the matrices with a large parameter of the time-step $t$.

The tropical TEBD algorithm described in the present document enables optimization of the computational resources by exploring an optimal subspace of large quantum space while looking for the optimal classical solution of the combinatorial optimization problem. The trajectory followed using this tropical TEBD algorithm and the entanglement it generates (and thus the computational cost) during the time evolution is closer to optimal as compared to the regular unconstrained TEBD algorithm.

According to the equation (13), the tropical matrix factorization of the tropical matrix M is known to be NP-hard. However, approximating algorithms have been proposed recently. Therefore, like the current version of TEBD, the matrix decomposition step remains the computational bottleneck even in the tropical version. However, the tropical factorization algorithms can be improved by using known ideas from the quantum-inspired methods, for example, a variational optimization, to determine A and B.

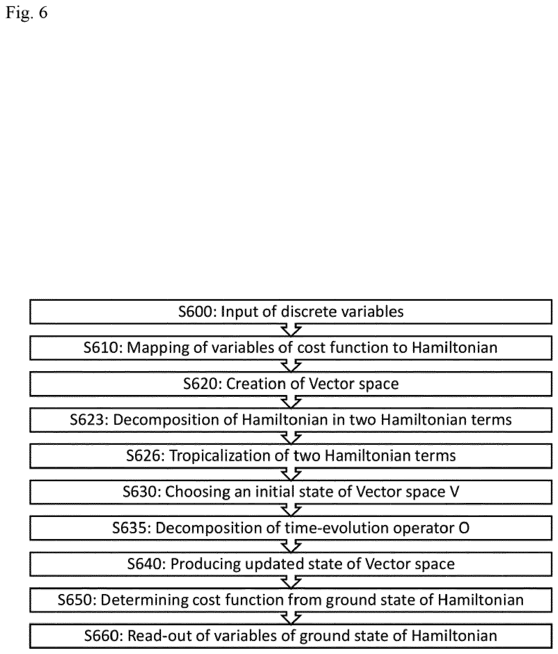

Fig. 6 shows an outline of the computer-implemented method for solving the combinatorial optimization problem of a cost function. In a first input step S600, the discrete variables of the cost function are input to the computer system 100. The mapping module 80 maps the variables of the cost function to the Hamiltonian ($H(x_1, x_2, \dots x_n)$) in a mapping step S610. The vector space V spanning the classical states corresponding to the classical configurations of the discrete variables of the cost function is created in a vector creation step S620 in the processor 10.

In an optional decomposition step S623, the Hamiltonian ($H(x_1, x_2, \dots x_n)$) can be decomposed in the decomposition module 60 to a sum of two variable Hamiltonians having two variable Hamiltonian terms. In an optional tropicalisation step S626, the terms of the Hamiltonian ($H(x_1, x_2, \dots x_n)$) can be tropicalised.

The initial state of a vector space V representative of the cost function is chosen in an initial state choice step S630 after which the time-evolution operator O is applied to the initial state to produce an updated state in an updating step S640. As noted above, it is possible to apply this time-evolution operator O only to those states in the vector space V which are matrix product states. In an optional decomposition step S635, the time-evolution operator O can be decomposed using a Suzuki-Trotter expansion or into a product of two variable operators, as explained above.

This updating step S640 is iteratively applied to produce further updated states until the ground state is reached at which point the cost function is determined from the ground state of the Hamiltonian in a determination step S650. The variables of the ground state can be read out in a read-out step S660 through the output device 30.

The optimized TEBD-based algorithm described in the present document is suitable for the combinatorial optimization problems. The TEBD algorithm is known to be scalable and adapted for implementing optimization constraints. The present document described the quadratic combinatorial optimization problem, however the optimized tropical TEBD algorithm can be extended to higher-order cost functions.

REFERENCE NUMBER

**[0099]**

| | |
|---|---|
| 10 | Processor |
| 20 | Input device |
| 30 | Output device |
| 40 | Memory |
| 50 | TEBD module |
| 60 | Decomposition module |
| 70 | Tropicalisation module |
| 80 | Mapping module |
| 100 | System |

| | |
|---|---|
| t | Time step |
| O | Imaginary time-evolution operator |
| N | Number of epochs |
| H | Hamiltonian |
| V | Vector space |
| T | Tropicalization map |
| D | De-tropicalization map |

**Claims**

1. A computer implemented method for solving a combinatorial optimization problem of a cost function implemented on a digital computer system comprising a processor (10) adapted to execute a time evolving block decimation (TEBD) algorithm, the method using a time-evolving block decimation (TEBD) algorithm, the method using a classical processor comprising:

   - mapping (S610) the cost function to a Hamiltonian ($H(x_1, x_2, ... x_n)$) in a mapping module (80);
   - choosing (S630) an initial state of a vector space (V) representative of the cost function;
   - applying a time-evolution operator (O) to the state to produce (S640) an updated state;
   - iteratively applying the time-evolution operator to the updated state to produce (S640) a further updated state until a ground state is reached; and
   - determining (S650) the cost function from the ground state of the Hamiltonian.

2. The method of claim 1, further comprising decomposing (S623) in a decomposition module (60) the Hamiltonian ($H(x_1, x_2, ... x_n)$) into a sum of two variable Hamiltonians having two variable Hamiltonian terms.

3. The method of any of the above claims, further comprising applying the time-evolution operator (O) only to a subset of the states in the vector space (V) which are matrix product states.

4. The method of any of the above claims, further comprising tropicalizing terms (S626) in the Hamiltonian ($H(x_1, x_2, ... x_n)$) in a tropicalisation module (80) prior to applying the time-evolution operator (O).

5. The method of any of the above claims, further comprising decomposing (S635) the time-evolution operator (O) into one of a product of two variable operators or using a Suzuki-Trotter expansion.

6. A computer system (100) for solving a combinatorial optimization problem of a cost function, the computer system (100) comprising:

   - a memory (40) for storing data relating to states of a vector space (V) representative of the cost function and executable computer components;
   - a processor (10) for executing the executable computer modules, wherein the executable computer modules comprise:
   - a mapping module (80) for mapping the cost function to a Hamiltonian ($H(x_1, x_2, ... x_n)$); and
   - a TEBD module (50) for applying a time-evolution operator (O) to the states of the vector space (V) until a ground state of the Hamiltonian ($H(x_1, x_2, ... x_n)$) is determined.

7. The computer system of claim 6, further comprising a decomposition module (60) for decomposing the Hamiltonian ($H(x_1, x_2, ... x_n)$ ) into a sum of two variable Hamiltonians having two variable Hamiltonian terms.

8. The computer system (100) of claim 6 or 7 further comprising a tropicalisation module (80) for tropicalizing terms in the Hamiltonian ($H(x_1, x_2, ... x_n)$)

9. The computer system (100) of any of claims 6 to 8, further comprising an input device (20) for inputting the cost function to the memory (40).

10. The computer system (100) of any of claims 6 to 9, further comprising an output device (30) for outputting the ground states of the Hamiltonian ($H(x_1, x_2, ... x_n)$).

11. The computer system (100) of any of claim 6 to 9, wherein the TEBD module (50) is further adapted to decompose the time-evolution operator (O) into one of a product of two variable operators or using a Suzuki-Trotter expansion.

12. Use of the method according to at least one of claims 1 to 5, wherein the cost function is representative of one of a travelling salesperson problem, logistics, energies in chemical state of a chemical compound, energy transmission networks, pattern detection, image and speech recognition, predictive maintenance of machines in a factory.

Fig. 1

Fig. 2

Fig. 3

Fig. 4

```
┌──────────────────────────────────────────────────────────────┐
│                                                                │
│      S101: Tropicalization of all gates and initial MPS arrays │
│                                                                │
└──────────────────────────────────────────────────────────────┘
                              ▽
┌──────────────────────────────────────────────────────────────┐
│   S102: Replacement of real numbers of regular algebra with    │
│              tropical numbers of tropical algebra              │
└──────────────────────────────────────────────────────────────┘
                              ▽
┌──────────────────────────────────────────────────────────────┐
│   S103: Replacement of a matrix singular value decomposition   │
│              with tropical matrix factorization               │
└──────────────────────────────────────────────────────────────┘
                              ▽
┌──────────────────────────────────────────────────────────────┐
│             S104: De-tropicalization of MPS arrays             │
└──────────────────────────────────────────────────────────────┘
```

Fig. 5

Fig. 6

| S600: Input of discrete variables |
|---|

| S610: Mapping of variables of cost function to Hamiltonian |
|---|

| S620: Creation of Vector space |
|---|

| S623: Decomposition of Hamiltonian in two Hamiltonian terms |
|---|

| S626: Tropicalization of two Hamiltonian terms |
|---|

| S630: Choosing an initial state of Vector space V |
|---|

| S635: Decomposition of time-evolution operator O |
|---|

| S640: Producing updated state of Vector space |
|---|

| S650: Determining cost function from ground state of Hamiltonian |
|---|

| S660: Read-out of variables of ground state of Hamiltonian |
|---|

Europäisches
Patentamt

European
Patent Office

Office européen
des brevets

# EUROPEAN SEARCH REPORT

Application Number

EP 23 38 2770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEBASTIAN PAECKEL ET AL: "Time-evolution methods for matrix-product states", ARXIV.ORG, CORNELL UNIVERSITY LIBRARY, 201 OLIN LIBRARY CORNELL UNIVERSITY ITHACA, NY 14853, 17 January 2019 (2019-01-17), XP081531971, DOI: 10.1016/J.AOP.2019.167998 * sections 2-4 and Algorithm 1 * | 1-12 | INV. G06N5/01 G06N10/60 G06Q10/047 |
| A | HE-LIANG HUANG ET AL: "Near-Term Quantum Computing Techniques: Variational Quantum Algorithms, Error Mitigation, Circuit Compilation, Benchmarking and Classical Simulation", ARXIV.ORG, CORNELL UNIVERSITY LIBRARY, 201 OLIN LIBRARY CORNELL UNIVERSITY ITHACA, NY 14853, 27 December 2022 (2022-12-27), XP091403006, * section VI.3-5; the whole document * | 1-12 | |
| A,D | JIN-GUO LIU ET AL: "Tropical Tensor Network for Ground States of Spin Glasses", ARXIV.ORG, CORNELL UNIVERSITY LIBRARY, 201 OLIN LIBRARY CORNELL UNIVERSITY ITHACA, NY 14853, 17 February 2021 (2021-02-17), XP081880615, * the whole document * | 1-12 | TECHNICAL FIELDS SEARCHED (IPC) G06N G06Q |

The present search report has been drawn up for all claims

| Place of search | Date of completion of the search | Examiner |
|---|---|---|
| The Hague | 23 January 2024 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

**REFERENCES CITED IN THE DESCRIPTION**

**Patent documents cited in the description**

- US 10452990 B

- US 11580438 B, McMahon

**Non-patent literature cited in the description**

- **LIU et al.** Computing Solution Space Properties of Combinatorial Optimization Problems via General Tensor Networks. *arXiv:12205.03718v3*, 23 September 2022

- **LIU et al.** Tropical Tensor Network for Ground States of Spin Glasses. *arXiv:2008.06888v2*, 17 February 2021